# EUROPÄISCHE PATENTSCHRIFT

(11) **EP 2 862 637 B1**
(45) Veröffentlichungstag und Bekanntmachung des Hinweises auf die Patenterteilung: **26.07.2017**
(21) Anmeldenummer: 14187688.8
(22) Anmeldetag: 04.10.2014
(51) Int. Cl.: B08B 9/049, B60B 19/14, B60B 3/14, F16L 55/32, F16L 55/28, B60B 37/10

(54) **Schnellwechselsystem für Räder eines Inspektionswagens**
Quick change system for wheels of an inspection cart
Système de changement rapide de roues d'un chariot d'inspection

(30) Priorität: 21.10.2013 DE 202013104734 U
(43) Veröffentlichungstag der Anmeldung: 22.04.2015
(73) Patentinhaber: iPEK International GmbH, 87477 Sulzberg (DE)
(72) Erfinder: Pomp, Dominik, 87435 Kempten (DE)
(74) Vertreter: 2s | ip Schramm Schneider Patentanwälte Rechtsanwälte

(56) Entgegenhaltungen:
- DE-A1-102004 032 678
- DE-U1- 8 400 322
- DE-U1-202014 101 827
- FR-A1- 2 473 423
- US-A- 3 001 601

## Beschreibung

### Gebiet der Erfindung

Die Erfindung betrifft ein Wechselsystem für Fahrwagenräder eines Inspektionswagens, insbesondere eines Kanalinspektions- und/oder Kanalreinigungssystems, zum werkzeuglosen Wechseln von Fahrwagenrädern, sowie einen Inspektionswagen mit an den Fahrwagenachsen angeordneten Fahrwagenrädern, die ein erfindungsgemäßes Wechselsystem aufweisen.

### Hintergrund der Erfindung und Stand der Technik

Für die Inspektion von Kanälen, insbesondere Abwasserkanälen, Anschlusskanälen oder sonstiger abwassertechnischer Anlagen wird herkömmlicherweise ein selbstfahrender Wagen bzw. Inspektionswagen eingesetzt. Ähnliche Wagen bzw. Fahrzeuge werden auch zu Reinigungszwecken in den Kanälen eingesetzt. Die Inspektionswagen bzw. Reinigungswagen weisen hierzu Räder auf, mit denen eine Bewegung im Kanal bzw. in der Rohrleitung bewerkstelligt wird. In Abhängigkeit beispielsweise des Kanal- bzw. Rohrdurchmessers muss der Inspektions- bzw. Reinigungswagen mit Rädern bestückt werden, die vorzugsweise eine an den Rohr- bzw. Kanaldurchmesser angepasste Bereifung aufweisen. Hierbei ist es wünschenswert, die Räder samt der Bereifung lösbar an den Fahrwagenachsen anzuordnen, um ein Austauschen der Räder zu ermöglichen, sodass ein Inspektions- bzw. Reinigungswagen in unterschiedlichen Kanälen bzw. Rohren verwendet werden kann.

Im Stand der Technik ist es bekannt, die Räder eines Inspektions- bzw. Reinigungsfahrzeuges mit einer oder mehreren Schrauben an der Fahrwagenachse zu befestigen (siehe z.B. Dokument US 3 001 601). Dies hat allerdings den Nachteil, dass einerseits Werkzeuge zum Lösen der Schrauben benötigt werden und andererseits die gelösten Schrauben und gegebenenfalls Unterlegscheiben leicht verloren gehen können, sodass es zu Ausfallzeiten des Inspektions- bzw. Reinigungswagens kommen kann. Zudem nimmt der Wechsel der Fahrwagenräder eine gewisse Zeit in Anspruch, weil für jedes Rad die jeweiligen Befestigungsschrauben gelöst und nach dem Wechsel des Rades wieder eingeschraubt werden müssen. Ein weiterer Nachteil liegt darin, dass, sofern die benötigten Werkzeuge für den Radwechsel nicht zur Verfügung stehen, ein Radwechsel überhaupt nicht vorgenommen werden kann.

### Aufgabe der Erfindung

Aufgabe der vorliegenden Erfindung ist es daher, ein System bereitzustellen, mit dem Räder eines Inspektions- bzw. Reinigungswagens, insbesondere eines Kanalinspektions- und/oder Kanalreinigungssystems, schneller, komfortabler, sicherer und werkzeuglos gewechselt werden können.

### Erfindungsgemäße Lösung

Erfindungsgemäß wird diese Aufgabe mit einem Schnellwechselsystem für Fahrwagenräder eines Inspektionswagens, insbesondere eines Kanalinspektions- und/oder Kanalreinigungssystems, sowie einen Inspektionswagen, der Räder aufweist, die ein erfindungsgemäßes Schnellwechselsystem aufweisen, gemäß den unabhängigen Ansprüchen gelöst. Vorteilhafte Ausgestaltungen und Weiterbildungen der Erfindung sind in den abhängigen Ansprüchen angegeben.

Bereitgestellt wird demnach ein Schnellwechselsystem für Fahrwagenräder eines Inspektionswagens zum werkzeuglosen Wechseln der Fahrwagenräder des Inspektionswagens, umfassend eine Adapteraufnahme und eine Reifenaufnahme, wobei
- die Adapteraufnahme im Wesentlichen zylinderförmig ausgestaltet ist,
- die Reifenaufnahme eine im Wesentlichen zylinderförmige und axiale Aussparung aufweist, wobei die Adapteraufnahme um eine Längsachse des Schnellwechselsystems relativ zur Reifenaufnahme drehbar in der Aussparung der Reifenaufnahme angeordnet ist, und
- in der Aussparung der Reifenaufnahme eine Arretiereinrichtung angeordnet ist, die mit der Reifenaufnahme und mit der Adapteraufnahme zusammenwirkt und die die Adapteraufnahme im arretierten Zustand gegen ein Drehen um die Längsachse des Schnellwechselsystems relativ zur Reifenaufnahme sichert.

Die Arretiereinrichtung kann ein Verriegelungskreuz und zumindest ein Federelement umfassen, wobei
- in der Bodenfläche der Aussparung der Reifenaufnahme eine erste mit dem Verriegelungskreuz korrespondierende Aussparung vorgesehen ist, in die das Verriegelungskreuz in einem arretierten Zustand der Arretiereinrichtung teilweise in Eingriff bringbar ist,
- in der Grundfläche der Adapteraufnahme eine zweite mit dem Verriegelungskreuz korrespondierende Aussparung vorgesehen ist, in die das Verriegelungskreuz in einem nicht arretierten Zustand der Arretiereinrichtung vollständig in Eingriff bringbar ist, und
- in der zweiten Aussparung das zumindest eine Federelement angeordnet ist, wobei das Federelement das Verriegelungskreuz im arretierten Zustand der Arretiereinrichtung teilweise aus der zweiten Aussparung herausdrückt und in die erste Aussparung hineindrückt, sodass das Verriegelungskreuz im arretierten Zustand der Arretiereinrichtung sowohl in die erste Aussparung als auch in die zweite Aussparung eingreift.

Die Arretiereinrichtung kann ferner einen Druckstift umfassen, der in einem axialen Bohrloch im Boden der Aussparung der Reifenaufnahme angeordnet ist und mit dem Verriegelungskreuz zusammenwirkt, wobei ein Bewegen des Druckstiftes gegen das Verriegelungskreuz ein Bewegen des Verriegelungskreuzes gegen die Federkraft des Federelements bewirkt, sodass das Verriegelungskreuz vollständig aus der Aussparung in der Bodenfläche der Reifenaufnahme herausschiebbar ist und die Arretiereinrichtung in einen nicht arretierten Zustand bringbar ist.

Das Verriegelungskreuz kann ein Kreuzprofil mit drei in einem Winkel von 120° zueinander angeordneten Profilschenkel aufweisen, wobei das zumindest eine Federelement drei Schraubendruckfedern umfasst, wobei jede der Schraubendruckfedern zumindest teilweise in einer axialen Bohrung in der zweiten Aussparung angeordnet ist, derart, dass jeweils eine Schraubendruckfeder eine Federkraft gegen jeweils einen Profilschenkel ausübt.

Das Schnellwechselsystem kann ferner eine Sicherungsscheibe umfassen, die die Aussparung der Reifenaufnahme zumindest teilweise abdeckt, wobei die Sicherungsscheibe ein zur Aussparung der Reifenaufnahme koaxiales Loch aufweist, dessen Durchmesser kleiner ist als der Innendurchmesser der Aussparung der Reifenaufnahme und kleiner ist als der Außendurchmesser der Adapteraufnahme.

Die Sicherungsscheibe kann mit Befestigungsmittel, vorzugsweise Schrauben an der Reifenaufnahme befestigbar sein und im befestigten Zustand ein axiales Bewegen der in der Aussparung der Reifenaufnahme angeordneten Adapteraufnahme relativ zur Reifenaufnahme weitgehend verhindern.

Damit kann die Adapteraufnahme lediglich um die Längsachse des Schnellwechselsystems gedreht werden. Eine axiale Bewegung der Adapteraufnahme relativ zur Reifenaufnahme bzw. relativ zum Schnellwechselsystem ist nicht mehr möglich.

Die Adapteraufnahme kann eine dritte Aussparung aufweisen, die an der die zweite Aussparung aufweisenden gegenüberliegenden Grundfläche vorgesehen ist, zur Aufnahme eines Achsenendabschnittes und/oder eines Achsadapters, wobei die dritte Aussparung einen Querschnitt aufweist, der eine Drehung des in der dritten Aussparung angeordneten Achsenendabschnittes und/oder Achsadapters um die Längsachse des Schnellwechselsystems verhindert.

Die dritte Aussparung der Adapteraufnahme und der Achsenendabschnitt und/oder der Achsadapter können einen identischen Querschnitt aufweisen.

Die dritte Aussparung der Adapteraufnahme weist vorzugsweise eine Seitenwandung mit drei im Wesentlichen in einem Winkel von 60° zueinander angeordneten flachen Abschnitten auf.

Vorzugsweise sind jeweils zwei flache Abschnitte der Seitenwandung über einen gekrümmten Abschnitt mit einem vorbestimmten Radius miteinander verbunden.

Die Adapteraufnahme kann eine Anzahl von radialen Durchbrechungen aufweisen, die jeweils in der dritten Aussparung der Adapteraufnahme münden.

Die radialen Durchbrechungen umfassen vorzugsweise drei radiale Bohrlöcher, die in Umfangsrichtung der Adapteraufnahme gleichmäßig beabstandet sind.

Vorzugsweise sind die radialen Durchbrechungen in Umfangsrichtung der Adapteraufnahme derart angeordnet, dass sich die Mündungen der Durchbrechungen jeweils im Bereich eines flachen Abschnittes der Seitenwandung der dritten Aussparung der Adapteraufnahme befinden.

In einer vorteilhaften Ausgestaltung der Erfindung weist die Adapteraufnahme Sicherungselemente auf, die mit einem in der dritten Aussparung der Adapteraufnahme angeordneten Achsenendabschnitt oder Achsadapter zusammenwirken, die zwischen einer Sicherungsposition und einer Entsicherungsposition bewegbar sind und die in einer Sicherungsposition ein axiales Bewegen des in der dritten Aussparung der Adapteraufnahme angeordneten Achsenendabschnittes oder Achsadapters relativ zur Adapteraufnahme verhindern.

Vorzugsweise sind die Sicherungselemente in den radialen Durchbrechungen der Adapteraufnahme angeordnet und axial nach innen in die Sicherungsposition bewegbar.

Die Sicherungselemente können in der Sicherungsposition zumindest teilweise aus den jeweiligen Mündungen der Durchbrechungen herausragen und in korrespondierende Aussparungen, die in Umfangsrichtung des Achsenendabschnittes oder Achsadapters angeordnet sind, eingreifen. Damit ist das erfindungsgemäße Schnellwechselsystem an dem Achsenendabschnitt oder an dem Achsenadapter axial gesichert.

Die Sicherungselemente können kugelförmig oder stiftförmig ausgestaltet sein.

In einer vorteilhaften Ausgestaltung der Erfindung sind in jeder Durchbrechung der Adapteraufnahme mindestens zwei kugelförmige Sicherungselemente angeordnet.

In der Seitenwandung der zylinderförmigen Aussparung der Reifenaufnahme kann eine Anzahl von in Umlaufrichtung vorzugsweise gleichmäßig beabstandeten Kulissenaussparungen vorgesehen sein, wobei die Tiefe der Kulissenaussparungen in Umlaufrichtung zunimmt.

In einer vorteilhaften Ausgestaltung der Erfindung sind drei Kulissenaussparungen vorgesehen, wobei die in den radialen Durchbrechungen der Adapteraufnahme angeordneten Sicherungselemente zumindest teilweise in die Kulissenaussparungen hineinragen.

Bei einer Drehung der Adapteraufnahme um die Längsachse des Schnellwechselsystems relativ zur Reifenaufnahme und
- in Richtung zur geringeren Tiefe der Kulissenaussparungen bewirken die Kulissenaussparungen ein Bewegen der Sicherungselemente in die Sicherungsposition, und
- in Richtung zur größeren Tiefe der Kulissenaussparungen sind die Sicherungselemente in eine Entsicherungsposition bringbar.

In einer Ausgestaltung der Erfindung umfasst das Schnellwechselsystem ferner einen Achsadapter, der an einem Achsenendabschnitt einer Fahrwagenachse eines Inspektionswagens befestigbar, insbesondere lösbar befestigbar ist und der das gleiche Querschnittsprofil aufweist, wie die dritte Aussparung in der Adapteraufnahme. Damit können bestehende Fahrwagenachsen bzw. Endabschnitte der Fahrwagenachse nach- bzw. aufgerüstet werden, um ein schnelles und insbesondere werkzeugloses Wechseln von Rädern, die ein erfindungsgemäßes Schnellwechselsystem aufweisen, zu ermöglichen.

Der Achsadapter weist vorzugsweise in Umfangsrichtung zueinander beabstandete Aussparungen auf, in die die Sicherungselemente in der Sicherungsposition eingreifen. Diese Aussparungen können kugelkappenförmig bzw. muldenförmig ausgestaltet sein.

Vorzugsweise weisen die einzelnen Komponenten des erfindungsgemäßen Schnellwechselsystems ein Metall oder einen stabilen Kunststoff auf.

Bereitgestellt wird ferner ein Inspektionswagen, insbesondere eines Kanalinspektions- und/oder Kanalreinigungssystems, umfassend zumindest eine Fahrwagenachse, an der Fahrwagenräder angeordnet sind, die ein erfindungsgemäßes Schnellwechselsystem aufweisen.

Die Erfindung bringt insbesondere den Vorteil mit sich, dass Räder bzw. Fahrwagenräder werkzeuglos montiert, demontiert bzw. ausgewechselt werden können, was ein besonders schnelles und einfaches Wechseln der Räder ermöglicht. Weil das Lösen von Schraubverbindungen zum Abnehmen von Fahrwagenrädern entfällt und weil das zu montierende Fahrwagenrad lediglich auf die Fahrwagenachse aufgeschoben und mit einer Drehung gesichert werden muss, ist ein Radwechsel auch wesentlich schneller bewerkstelligbar, als bei aus dem Stand der Technik bekannten Fahrwagenrädern.

Da keinerlei Schrauben oder sonstigen lösbaren Teile an dem Schnellwechselsystem vorhanden sind, können diese auch nicht verloren gehen, sodass Stillstandzeiten erheblich reduziert werden können.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein Beispiel eines Inspektions- bzw. Reinigungswagens mit drei Fahrwagenachsen zur Verdeutlichung des Grundprinzips des erfindungsgemäßen Schnellwechselsystems;
- Fig. 2: zwei perspektivische Ansichten eines Achsadapters eines erfindungsgemäßen Schnellwechselsystems;
- Fig. 3: ein erfindungsgemäßes Schnellwechselsystem in einer Ansicht von vorne;
- Fig. 4: eine Schnittansicht eines erfindungsgemäßen Schnellwechselsystems entlang der Schnittachse A-A;
- Fig. 5: eine Schnittansicht eines erfindungsgemäßen Schnellwechselsystems entlang der Schnittachse D-D;
- Fig. 6: eine Schnittansicht eines erfindungsgemäßen Schnellwechselsystems entlang der Schnittachse C-C; und
- Fig. 7: zwei perspektivische Ansichten eines erfindungsgemäßen Schnellwechselsystems.

### Detaillierte Beschreibung der Figuren

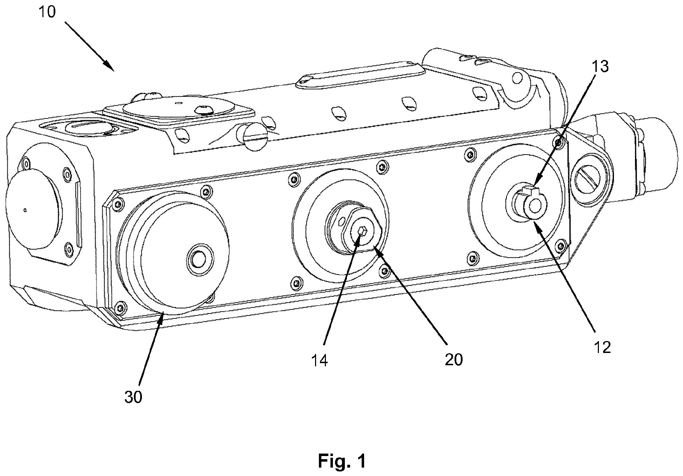

**Fig.** 1 zeigt ein Beispiel eines Inspektions- bzw. Reinigungswagens 10, der beispielsweise als Kamerawagen zur Inspektion von Kanal- bzw. Rohrleitungen ausgestaltet sein kann. Bei der in Fig. 1 gezeigten Darstellung des Inspektions- bzw. Reinigungswagens sind nur die für die vorliegende Erfindung wesentlichen Elemente gezeigt. Der Inspektions- bzw. Reinigungswagen 10 kann weitere hier nicht gezeigte Aufbauten bzw. Anbauten aufweisen.

Der in Fig. 1 gezeigte Inspektions- bzw. Reinigungswagen weist drei Rad- bzw. Fahrwagenachsen 12 auf. Selbstverständlich kann ein Inspektions- bzw. Reinigungswagen 10 auch mehr als drei bzw. weniger als drei Fahrwagenachsen 12 aufweisen.

An dem freien Ende weist die im Wesentlichen zylindrische Fahrwagenachse 12 einen radialen Zapfen 13 auf, der als Verdrehsicherung für einen auf die Fahrwagenachse 12 aufgesetzten Achsadapter 20 dient. Der Achsenendabschnitt der Fahrwagenachse 12 kann aber auch einen rechteckigen bzw. quadratischen Querschnitt aufweisen, sodass eine Verdrehsicherung eines aufgesetzten Achsadapters 20 bereits aufgrund der Geometrie des Achsenendabschnittes gegeben ist, sodass auf dem hier gezeigten radialen Zapfen 13 auch verzichtet werden kann.

In dem in Fig. 1 gezeigten Beispiel ist an der mittleren Radachse ein Achsadapter 20 angeordnet und mit einer Schraube 14 fest mit der Fahrwagenachse 12 verbunden. Auf den Achsadapter 20 wird das Rad, das ein erfindungsgemäßes Schnellwechselsystem aufweist, bis zum Anschlag aufgeschoben und durch eine Drehung axial gesichert. Durch die Geometrie des Adapters 20 ist zudem gewährleistet, dass sich das montierte Rad bzw. das montierte Schnellwechselsystem nicht relativ zum Achsadapter 20 um die Längsachse der Fahrwagenachse drehen kann.

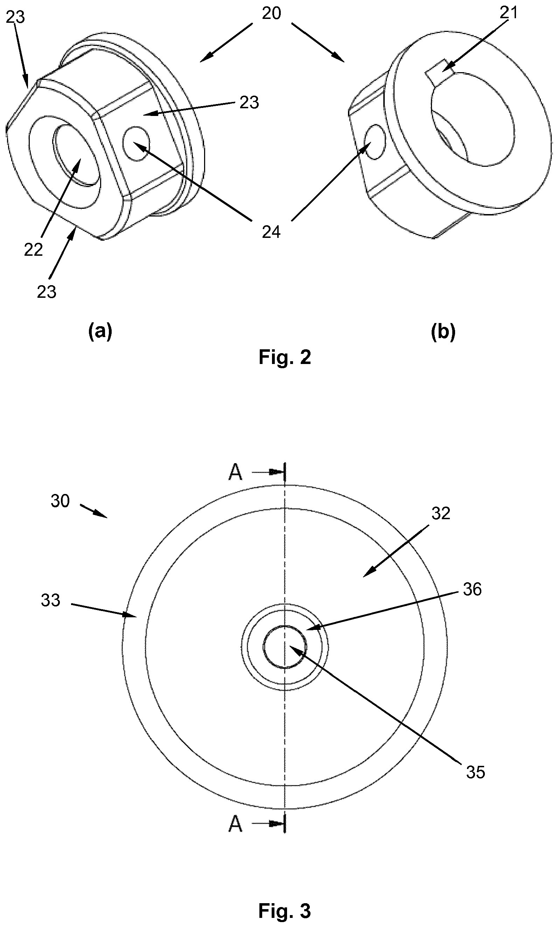

Eine detaillierte Ansicht eines Achsadapters 20 wird mit Bezug auf Fig. 2 näher beschrieben.

Anstelle eines Achsadapters 20 kann der Achsenendabschnitt der Fahrwagenachse die gleiche Geometrie und Abmessungen aufweisen, wie der Achsadapter 20, sodass ein Rad mit dem erfindungsgemäßen Schnellwechselsystem direkt auf der Fahrwagenachse montiert werden kann. Ein Achsadapter 20, der an dem Endabschnitt der Fahrwagenachse 12 angebracht wird, hat allerdings den Vorteil, dass auch Inspektions- bzw. Reinigungswagen mit herkömmlichen Fahrwagenachsen nachgerüstet bzw. aufgerüstet werden können, um Räder mit einem erfindungsgemäßen Schnellwechselsystem aufnehmen zu können.

In Fig. 1 ist ein an der linken Fahrwagenachse montiertes erfindungsgemäßes Schnellwechselsystem (ohne Bereifung) eines Rades gezeigt. Der Aufbau und die Funktionsweise des erfindungsgemäßen Schnellwechselsystems 30 werden mit Bezug auf Fig. 3 bis Fig. 7 näher beschrieben.

**Fig. 2** zeigt zwei Abbildungen eines Achsadapters 20 eines erfindungsgemäßen Schnellwechselsystems in einer perspektivischen Ansicht von vorne (a) und von hinten (b).

An der Rückseite weist der Achsadapter eine zylindrische Ausnehmung auf, dessen Durchmesser im Wesentlichen dem Durchmesser des Endabschnittes der Fahrwagenachse entspricht. In diese Ausnehmung wird die Fahrwagenachse bzw. der Endabschnitt der Fahrwagenachse aufgenommen. Ferner weist die Seitenwandung dieser Ausnehmung eine radiale Aussparung 21 auf, die mit dem in Fig. 1 gezeigten Zapfen 13 der Fahrwagenachse korrespondiert. Im montierten Zustand des Achsadapters 20 greift der radiale Zapfen 13 der Fahrwagenachse in die radiale Aussparung 21 ein, sodass ein Drehen des Achsadapters 20 um die Längsachse der Fahrwagenachse relativ zur Fahrwagenachse verhindert wird.

An der Außenwandung des Achsadapters 20 sind in Umfangsrichtung zueinander gleichmäßig beabstandete Aussparungen 24 vorgesehen, in die Sicherungselemente des Schnellwechselsystems axial eingreifen können. Die Aussparungen 24 sind vorzugsweise kugelkappenförmig bzw. muldenförmig ausgestaltet, sodass ein Entsicherungsvorgang bzw. ein Lösen des Schnellwechselsystems von dem Achsadapter 20 mit wenig Kraftaufwand einfach möglich ist.

In der hier gezeigten Ausgestaltung weist die Seitenwandung des Achsadapters 20 drei flache Abschnitte 23 auf, die in einem Winkel von 60° zueinander stehen. Jeweils zwei flache Abschnitte 23 sind über einen gekrümmten Abschnitt, der einen vorbestimmten Radius aufweist, miteinander verbunden. Aufgrund dieser Geometrie wird verhindert, dass sich ein auf den Achsadapter 20 aufgesetztes erfindungsgemäßes Schnellwechselsystem um die Längsachse der Fahrwagenachse relativ zum Achsadapter drehen kann. Selbstverständlich kann der Achsadapter 20 auch eine andere Geometrie, beispielsweise einen quadratischen Querschnitt, aufweisen, die ein Drehen eines Schnellwechselsystems um die Längsachse der Fahrwagenachse relativ zum Achsadapter verhindert.

Ferner weist der Achsadapter 20 ein axiales Bohrloch 22 auf, das zur Aufnahme einer Schraube vorgesehen ist, mit der der Achsadapter an dem Endabschnitt der Fahrwagenachse befestigt werden kann. Vorzugsweise ist das Bohrloch 22 gesenkt ausgestaltet, sodass die Befestigungsschraube nicht über den Achsadapter hinausragt.

**Fig. 3** zeigt ein erfindungsgemäßes Schnellwechselsystem 30 in einer Ansicht von vorne, d.h. von der der Fahrwagenachse abgewandten Seite.

Von dem erfindungsgemäßen Schnellwechselsystem 30 sind in Fig. 3 die Sicherungsscheibe 33, die Reifenaufnahme 32 und der Druckstift 35 zu sehen. Der Druckstift 35 ist in einem Bohrloch angeordnet, das vorzugsweise gesenkt ausgestaltet ist, sodass der Druckstift im arretierten Zustand des Schnellwechselsystems nicht über die Reifenaufnahme 32 hinausragt. Die Senkung 36 des Bohrloches weist vorzugsweise einen äußeren Durchmesser auf, der ein einfaches Betätigen des Druckstiftes 35 mit einem Finger ermöglicht.

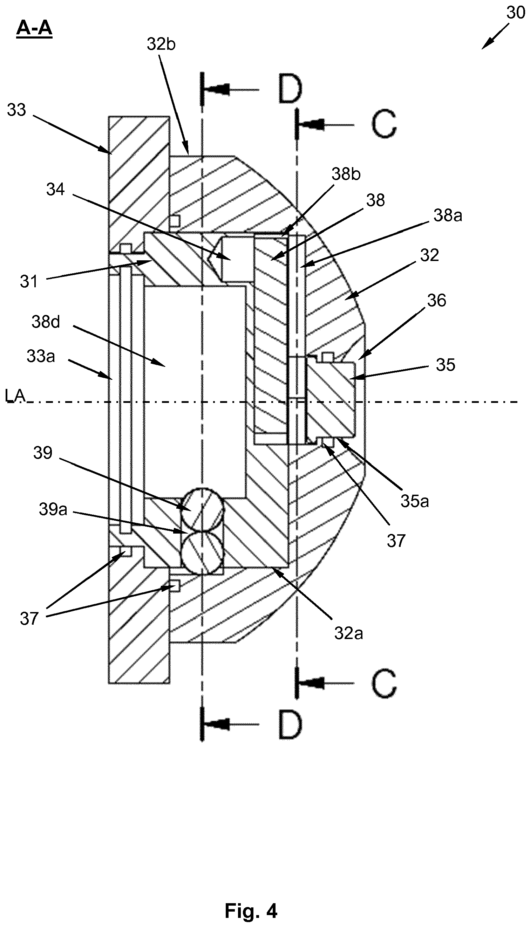

**Fig. 4** zeigt eine Schnittansicht eines erfindungsgemäßen Schnellwechselsystems 30 entlang der Schnittachse A-A.

Das erfindungsgemäße Schnellwechselsystem umfasst im Wesentlichen eine Reifenaufnahme 32, eine Adapteraufnahme 31 und eine Sicherungsscheibe 33 sowie eine Arretiereinrichtung und Sicherungselemente.

Die Reifenaufnahme 32 weist eine äußere Form auf, die im Wesentlichen einer Kugelkappe entspricht. Der kugelkappenförmige Abschnitt der Reifenaufnahme 32 geht in einen zylindrischen Abschnitt 32b über, der eine umlaufende Auflagefläche zur Aufnahme eines Reifens bildet.

Die Reifenaufnahme 32 weist ein axiales Bohrloch 35a auf, das zur Aufnahme eines Druckstiftes 35 vorgesehen ist. Der Druckstift 35 weist an dem der Fahrwagenachse zugewandten Ende einen größeren Durchmesser auf als das Bohrloch 35a, sodass ein Herausnehmen bzw. ein Herausfallen des Druckstiftes 35 aus dem Bohrloch 35a effektiv verhindert wird. In dem Bohrloch 35a kann ein umlaufender Dichtungsring 37 vorgesehen sein, der ein Eindringen von Flüssigkeit oder Schmutz in das Innere des Schnellwechselsystems verhindert.

An der der Fahrwagenachse zugewandten Seite weist die Reifenaufnahme 32 eine zylinderförmige und axiale Aussparung 32a zur Aufnahme der Adapteraufnahme 31 auf. Der Außendurchmesser der Adapteraufnahme 31 entspricht im Wesentlichen dem Innendurchmesser der Aussparung 32a der Reifenaufnahme 32. Der Außendurchmesser der Adapteraufnahme 31 und/oder der Innendurchmesser der Aussparung 32a der Reifenaufnahme 32 sind so angepasst, dass die Adapteraufnahme 31 in der Aussparung 32a um die Längsachse LA des Schnellwechselsystems relativ zur Reifenaufnahme 32 gedreht werden kann.

Das Drehen der Adapteraufnahme relativ zur Reifenaufnahme ist notwendig, um einen in der Adapteraufnahme aufgenommenen Achsadapter axial zu sichern, wie nachfolgend näher beschrieben wird.

In der Aussparung 32a der Reifenaufnahme 32 ist eine Arretiereinrichtung vorgesehen, die mit der Reifenaufnahme 32 und mit der in der Aussparung 32a angeordneten Adapteraufnahme 31 zusammenwirkt. Die Arretiereinrichtung gewährleistet, dass bei einem montierten Schnellwechselsystem die Adapteraufnahme 31 nicht relativ zur Reifenaufnahme 32 gedreht werden kann.

Die Arretiereinrichtung umfasst hier ein Verriegelungskreuz 38, Federelemente und den Druckstift 35. In dem Boden der Aussparung 32a der Reifenaufnahme 32 ist eine Aussparung 38a vorgesehen, in der das Verriegelungskreuz 38 zumindest teilweise in Eingriff gebracht werden kann. Ferner weist auch die dem Boden der Aussparung 32a zugewandte Oberfläche der Adapteraufnahme 31 eine Aussparung 38b auf, in der das Verriegelungskreuz ebenfalls in Eingriff gebracht werden kann. Die Aussparung 38b in der Adapteraufnahme 31 ist allerdings so dimensioniert, dass das Verriegelungskreuz 38 vollständig in ihr aufgenommen werden kann, um das Schnellwechselsystem zu entriegeln, sodass die Reifenaufnahme 32 relativ zur Adapteraufnahme 31 gedreht werden kann.

Im arretierten Zustand der Arretiereinrichtung greift das Verriegelungskreuz sowohl teilweise in die Aussparung 38a als auch teilweise in die Aussparung 38b ein, was ein gegenseitiges Verdrehen der Adapteraufnahme und der Reifenaufnahme verhindert.

Der Druckstift 35 ist vorgesehen, um das Verriegelungskreuz aus der Aussparung 38a herauszudrücken und vollständig in die Aussparung 38b hineinzudrücken und damit die Arretierung des Schnellwechselsystems zu lösen.

Wird der Druckstift 35 wieder losgelassen, bewirken Federelemente, dass das Verriegelungskreuz 38, sofern die Aussparung 38a und die Aussparung 38b deckungsgleich gegenüberliegen, wieder in Eingriff mit der Aussparung 38a gelangt. Zur Anordnung der Federelemente sind in der Adapteraufnahme 31 radiale Sackbohrungen 34 vorgesehen. Durch Drücken des Druckstiftes 35 wird das Verriegelungskreuz gegen die Federkraft der in den Bohrungen angeordneten Federelemente aus der Aussparung 38a herausgedrückt. Als Federelemente werden vorzugsweise Schraubendruckfedern verwendet.

Die in Fig. 4 gezeigte Arretiereinrichtung bzw. der Arretiermechanismus kann auch "spiegelverkehrt" aufgebaut sein. D.h., die Arretierung des Schnellwechselsystems wird gelöst, indem der Druckstift 35 aus dem Bohrloch 35a herausgezogen wird und dadurch das Verriegelungskreuz 38 vollständig in der Aussparung 38a der Reifenaufnahme 32 aufgenommen wird. Dementsprechend sind dann in der Reifenaufnahme 32 axiale Sackbohrungen vorgesehen, in die die Federelemente aufgenommen sind und die beim Loslassen des Druckstiftes 35 bewirken, dass das Verriegelungskreuz 38, sofern die Aussparung 38a und die Aussparung 38b deckungsgleich gegenüberliegen, zumindest teilweise in die Aussparung 38b hineingeschoben wird und somit das Schnellwechselsystem arretieren.

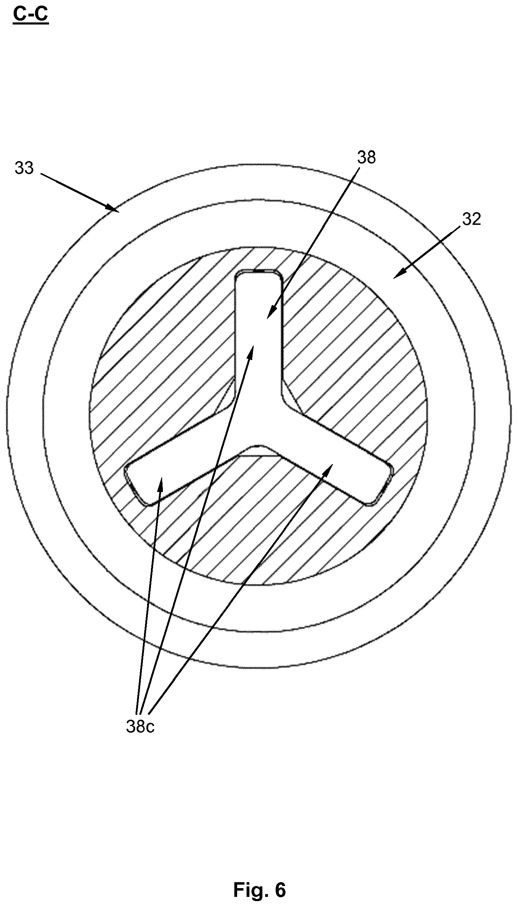

Eine konkrete Ausgestaltung eines erfindungsgemäßen Verriegelungskreuzes 38 ist mit Bezug auf Fig. 6 gezeigt.

In beiden Varianten der Ausgestaltung der Arretiereinrichtung kann der Druckknopf 35 fest mit dem Verriegelungskreuz verbunden sein bzw. einteilig ausgestaltet sein.

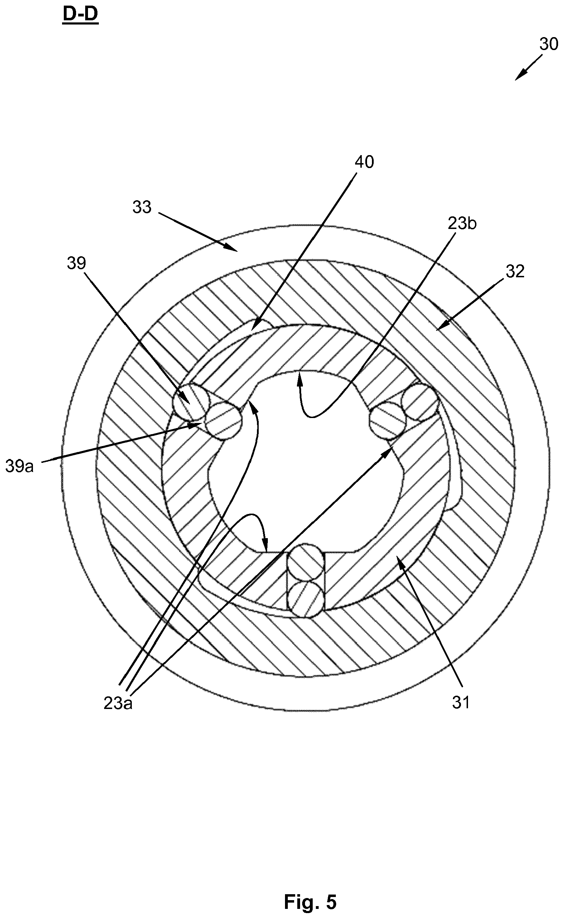

Die Adapteraufnahme 31 ist im Wesentlichen zylinderförmig ausgestaltet. An der der Fahrradachse zugewandten Seite weist die Adapteraufnahme 31 eine Aussparung 38d auf, in die der Achsadapter 20 oder ein Achsenendabschnitt einer Fahrwagenachse angeordnet wird. Die genaue Geometrie der Aussparung 38d der Adapteraufnahme wird mit Bezug auf Fig. 5 näher beschrieben.

Die Adapteraufnahme 31 weist an den Seitenwandungen radiale Durchbrechungen 39a auf, die jeweils in die Aussparung 38d münden. In der hier gezeigten Ausführungsform sind die radialen Durchbrechungen 39a als radiale Bohrlöcher ausgestaltet, die in Umfangsrichtung der Adapteraufnahme gleichmäßig beabstandet sind. In der hier gezeigten Ausführungsform weist die Adapteraufnahme 31 drei radiale Bohrlöcher 39a auf. Es können aber auch mehr als drei oder weniger als drei radiale Bohrlöcher 39a vorgesehen sein.

In den radialen Durchbrechungen bzw. radialen Bohrlöchern 39a sind Sicherungselemente 39 angeordnet, die hier kugelförmig ausgestaltet sind. Bei der in Fig. 4 gezeigten Ausgestaltung des erfindungsgemäßen Schnellwechselsystems sind in den radialen Bohrlöchern 39a jeweils zwei kugelförmige Sicherungselemente 39 angeordnet. Im gesicherten Zustand des Schnellwechselsystems ragen die Sicherungselemente 39 teilweise in radialer Richtung aus der Öffnung 39a hervor und greifen in korrespondierende Aussparungen 24 des Achsadapter 20 bzw. des Achsenendabschnittes einer Fahrwagenachse ein (vgl. Fig. 2).

Im entsicherten Zustand bzw. beim Entsichern des Schnellwechselsystems werden die Sicherungselemente soweit in die jeweiligen radialen Bohrlöcher 39a hineingedrückt, dass der Achsadapter bzw. der Achsenendabschnitt einer Fahrwagenachse in axialer Richtung aus der Aussparung 38d herausgezogen werden kann. Das Prinzip der Sicherung mit Hilfe der Sicherungselemente 39 wird mit Bezug auf Fig. 5 näher beschrieben.

An dem der Fahrwagenachse zugewandten Seite der Reifenaufnahme 32 ist eine Sicherungsscheibe 33 angeordnet, die ein axiales Loch 33a aufweist, durch welches der Achsadapter 20 bzw. ein Achsenendabschnitt einer Fahrwagenachse hindurchführbar ist. Des Weiteren ist der Durchmesser des Loches 33a der Sicherungsscheibe 33 kleiner als der Außendurchmesser der Adapteraufnahme 31, sodass die Sicherungsscheibe 33 die Adapteraufnahme 31 fest in der Aussparung 32a der Reifenaufnahme 32 hält und ein Verschieben der Adapteraufnahme 31 in radialer Richtung relativ zur Reifenaufnahme 32 verhindert.

Die Sicherungsscheibe 33 kann mit Schraubverbindungen, die hier nicht gezeigt sind, an der Reifenaufnahme 32 befestigt werden. Auch bei befestigter bzw. montierter Sicherungsscheibe 33 kann die Adapteraufnahme 31 um die Längsachse LA relativ zur Reifenaufnahme 32 gedreht werden, sofern sich die Arretiereinrichtung in einem nicht arretierten Zustand befindet.

Zwischen der Sicherungsscheibe 33 und der Reifenaufnahme 32 und/oder zwischen der Sicherungsscheibe 33 und der Adapteraufnahme 31 können umlaufende Dichtungsringe 37 vorgesehen sein, die ein Eindringen von Schmutz oder Flüssigkeit in das Innere des Schnellwechselsystems verhindern.

**Fig. 5** zeigt ein erfindungsgemäßes Schnellwechselsystem 30 in einer Schnittansicht entlang der Schnittachse D-D.

Erkennbar ist hier, dass die Sicherungsscheibe 33 einen größeren Außendurchmesser aufweist als die Reifenaufnahme 32. In einer Ausgestaltung der Erfindung können diese beiden Durchmesser allerdings auch identisch gewählt werden.

Die Seitenwandung der Aussparung 32a der Reifenaufnahme 32 weist eine Anzahl von in Umlaufrichtung gleichmäßig beabstandete Kulissenaussparungen 40 auf, die an der der Fahrwagenachse zugewandten Seite der Reifenaufnahme geöffnet sind. Wichtig ist hierbei, dass die Tiefe der Kulissenaussparungen 34 in Umfangsrichtung zunimmt, sodass beim Drehen der Reifenaufnahme 32 relativ zur Adapteraufnahme 31 die Sicherungselemente 39 radial nach innen geschoben werden oder radial nach außen gedrückt werden können.

Bei dem in Fig. 5 gezeigten Beispiel werden die kugelförmigen Sicherungselemente 39 bei einer Rechtsdrehung der Reifenaufnahme radial nach innen geschoben, sodass die radial innenliegende Kugel zumindest teilweise aus dem Bohrloch 39a herausragt und in Eingriff mit einer in Fig. 2 gezeigten Aussparung 24 gebracht wird. Ein axiales Lösen des Achsadapters 20 von der Adapteraufnahme 31 wird so verhindert.

Bei einer Linksdrehung wird der Abstand zwischen der Außenwandung der Adapteraufnahme 31 und der Seitenwandung der Kulissenaussparung 40 zunehmend größer, sodass die kugelförmigen Sicherungselemente 39 zumindest soweit radial nach außen geschoben werden können, dass die radial innenliegende Kugel aus der Aussparung 24 herausgeschoben werden kann. Dies kann beispielsweise durch ein leichtes Ziehen des Schnellwechselsystems in axialer Richtung von dem Achsadapter erfolgen.

Die Innenwandung der Aussparung 38d der Adapteraufnahme 31 weist in der hier gezeigten Ausführungsform drei im Wesentlichen flache Abschnitte 23a auf, die in einem Winkel von 60° zueinander stehen und wobei jeweils zwei flache Abschnitte 23a über einen gekrümmten Abschnitt 23b miteinander verbunden sind, wobei der gekrümmte Abschnitt 23b einen vorbestimmten Radius aufweist. Der Achsadapter 20 und die Aussparung 38d der Adapteraufnahme weisen im Wesentlichen dasselbe Profil auf, sodass ein Verdrehen der Adapteraufnahme relativ zu dem Achsadapter verhindert wird.

In einer alternativen Ausgestaltung der Erfindung kann die Aussparung 38d der Adapteraufnahme beispielsweise auch einen quadratischen Querschnitt aufweisen, d.h. vier im Wesentlichen ebene Seitenwandabschnitte aufweisen, die in einem Winkel von 90° zueinander stehen. Dementsprechend können auch vier radiale Durchbrechungen 39a vorgesehen sein, in denen die Sicherungselemente angeordnet sind. Entsprechend der vier radialen Durchbrechungen 39a sind dann auch vier Kulissenaussparungen 40 vorzusehen. Zudem ist auch die Form des Achsadapters 20 entsprechend anzupassen.

**Fig. 6** zeigt eine Schnittansicht eines erfindungsgemäßen Schnellwechselsystems entlang der Schnittachse C-C.

Erkennbar ist in Fig. 6 insbesondere die Ausgestaltung des Verriegelungskreuzes 38, das hier drei in einem Winkel von 120° zueinander angeordnete Profilschenkel 38c aufweist. Die Aussparung 38a in der Reifenaufnahme 32 und die Aussparung 38b in der Adapteraufnahme 31 zur Aufnahme des Verriegelungskreuzes weisen das gleiche Profil wie das Verriegelungskreuz selbst auf. Ferner sind in der Aussparung 38a der Reifenaufnahme oder in der Aussparung 38b der Adapteraufnahme vorzugsweise drei Federelemente vorgesehen, wobei die Federelemente so angeordnet sind, dass jedem Profilschenkel 38c ein Federelement zugeordnet ist.

In einer anderen hier nicht gezeigten Ausführungsform kann das Verriegelungskreuz 38 auch mehr Schenkel aufweisen. Beispielsweise kann ein Kreuzprofil mit vier Profilschenkel vorgesehen sein. In einer weiteren Ausgestaltung kann anstelle eines Verriegelungskreuzes auch eine Verriegelungsplatte bzw. ein Verriegelungsstab mit rechteckigem oder quadratischem Querschnitt vorgesehen sein.

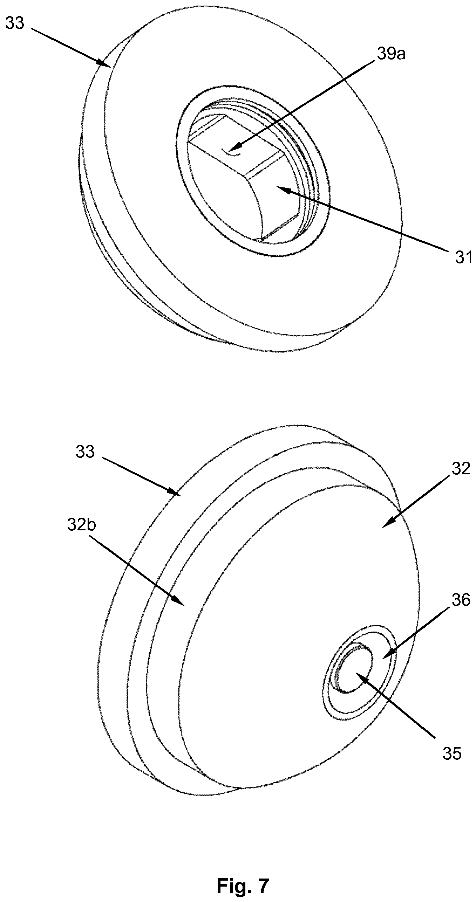

**Fig. 7** zeigt ein erfindungsgemäßes Schnellwechselsystem 30 in einer perspektivischen Ansicht. Erkennbar ist hier insbesondere der in der Senke 36 des Bohrloches 35a angeordnete Druckstift 35 im verriegelten Zustand des Schnellwechselsystems, wobei der Druckstift 35 nicht über das Schnellwechselsystem hinausragt. Deutlich erkennbar ist auch die umlaufende Auflagefläche 32b zur Aufnahme eines Reifens. Die Tiefe der umlaufenden Auflagefläche 32b kann entsprechend des zu verwendenden Reifens gewählt werden.

Das vorstehend beschriebene Schnellwechselsystem erlaubt ein besonders einfaches, schnelles und insbesondere werkzeugloses Wechseln von Rädern eines Inspektionswagens bzw. Reinigungswagens eines Kanalinspektions- und/oder Kanalreinigungssystems.

Für die Montage eines Rades mit einem erfindungsgemäßen Schnellwechselsystem wird die Adapteraufnahme 31 auf den Achsadapter 20 aufgeschoben und mit einer Drehung arretiert und gleichzeitig verriegelt. Für das Abnehmen eines Rades muss lediglich der Druckstift 35 gedrückt (oder herausgezogen) werden, um das Verriegelungskreuz zu entriegeln. Nach Entriegeln des Verriegelungskreuzes wird das Schnellwechselsystem in die entgegengesetzte Richtung gedreht, sodass die Sicherungselemente bzw. das Schnellwechselsystem entsichert wird. Nach dem Entsichern des Schnellwechselsystems kann das Rad von dem Achsadapter 20 bzw. von dem Endabschnitt einer Fahrwagenachse abgezogen werden.

### Bezugszeichen:

- 10: Fahrwagen bzw. Inspektionswagen
- 12: Rad- bzw. Fahrwagenachse
- 13: radialer Zapfen an der Fahrwagenachse
- 14: Schraube
- 20: Achsadapter
- 21: radiale Aussparung (korrespondierend mit dem Zapfen 13)
- 22: Bohrloch zur Aufnahme der Schraube 14
- 23: abgeflachte Abschnitte des Achsadapters
- 23a: flache Abschnitte der Seitenwandung der dritte Aussparung 38d
- 23b: gekrümmte Verbindungsabschnitt zwischen zwei flache Abschnitten 23a
- 24: Aussparungen (kugelkappenförmig bzw. muldenförmig)
- 30: Schnellwechselsystem
- 31: Adapteraufnahme
- 32: Reifenaufnahme
- 32a: zylinderförmige Aussparung der Reifenaufnahme 32 zur Aufnahme der Adapteraufnahme 31
- 32b: umlaufende Auflagefläche zur Aufnahme eines Reifens
- 33: Sicherungsscheibe
- 33a: axiales Loch in der Sicherungsscheibe
- 34: Bohrung zu Aufnahme eines Federelements der Arretiereinrichtung
- 35: Druckstift der Arretiereinrichtung
- 35a: Bohrloch zur Aufnahme des Druckstiftes
- 36: Vertiefung
- 37: Dichtungsring
- 38: Verriegelungskreuz der Arretiereinrichtung
- 38a: erste Aussparung in der Reifenaufnahme zur Aufnahme des Verriegelungskreuzes
- 38b: zweite Aussparung in der Adapteraufnahme zur Aufnahme des Verriegelungskreuzes
- 38c: Schenkel bzw. Profilschenkel des Verriegelungskreuzes
- 38d: dritte Aussparung in der Adapteraufnahme zur Aufnahme des Achsadapter 20
- 39: Sicherungselemente (z.B. Kugeln)
- 39a: radiale Durchbrechungen (z.B. Bohrlöcher) in der Adapteraufnahme 31
- 40: Kulissenaussparungen in der Seitenwandung der zylinderförmigen Aussparung 32a
- LA: Längsachse des Schnellwechselsystem

## Patentansprüche

1. Schnellwechselsystem (30) für Fahrwagenräder eines Inspektionswagens (10), insbesondere eines Kanalinspektions- und/oder Kanalreinigungssystems, umfassend eine Adapteraufnahme (31) und eine Reifenauf nahme (32), wobei
- die Adapteraufnahme (31) im Wesentlichen zylinderförmig ausgestaltet ist,
- die Reifenaufnahme (32) eine im Wesentlichen zylinderförmige und axiale Aussparung (32a) aufweist, wobei die Adapteraufnahme (31) um eine Längsdreh- achse (LA) des Schnellwechselsystems relativ zur Reifenaufnahme (32) drehbar in der Aussparung (32a) der Reifenaufnahme (32) angeordnet ist, und **dadurch gekennzeichnet**, daβ
- in der Aussparung (32a) der Reifenaufnahme (32) eine Arretiereinrichtung (35,38) angeordnet ist, die mit der Reifenaufnahme (32) und mit der Adapteraufnahme (31) zusammenwirkt und die die Adapteraufnahme (31) im arretierten Zustand gegen ein Drehen um die Längsachse (LA) des Schnellwechselsystems relativ zur Reifenaufnahme (32) sichert.

2. Schnellwechselsystem nach Anspruch 1, wobei die Arretiereinrichtung ein Verriegelungskreuz (38) und zumindest ein Federelement umfasst, wobei
- in der Bodenfläche der Aussparung (32a) der Reifenaufnahme (32) eine erste mit dem Verriegelungskreuz korrespondierende Aussparung (38a) vorgesehen ist, in die das Verriegelungskreuz in einem arretierten Zustand der Arretiereinrichtung teilweise in Eingriff bringbar ist,
- in der Grundfläche der Adapteraufnahme (31) eine zweite mit dem Verriegelungskreuz korrespondierende Aussparung (38b) vorgesehen ist, in die das Verriegelungskreuz in einem nicht arretierten Zustand der Arretiereinrichtung vollständig in Eingriff bringbar ist,
- in der zweiten Aussparung (38b) das zumindest eine Federelement angeordnet ist, wobei das Federelement das Verriegelungskreuz im arretierten Zustand der Arretiereinrichtung teilweise aus der zweiten Aussparung (38b) herausdrückt und in die erste Aussparung (38a) hineindrückt, sodass das Verriegelungskreuz im arretierten Zustand der Arretiereinrichtung sowohl in die erste Aussparung (38a) als auch in die zweite Aussparung (38b) eingreift.

3. Schnellwechselsystem nach Anspruch 2, wobei die Arretiereinrichtung ferner einen Druckstift (35) umfasst, der in einem axialen Bohrloch (35b) im Boden der Aussparung (32a) der Reifenaufnahme (32) angeordnet ist und mit dem Verriegelungskreuz zusammenwirkt, wobei ein Bewegen des Druckstiftes gegen das Verriegelungskreuz ein Bewegen des Verriegelungskreuzes gegen die Federkraft des Federelements bewirkt, sodass das Verriegelungskreuz vollständig aus der ersten Aussparung (38a) in der Bodenfläche der Reifenaufnahme (32) herausschiebbar ist und die Arretiereinrichtung in einen nicht arretierten Zustand bringbar ist.

4. Schnellwechselsystem nach einem der Ansprüche 2 bis 3, wobei das Verriegelungskreuz (38) ein Kreuzprofil mit drei in einem Winkel von 120° zueinander angeordneten Profilschenkel (38c) aufweist und wobei das zumindest eine Federelement drei Schraubendruckfedern umfasst, wobei jede der Schraubendruckfedern zumindest teilweise in einer axialen Bohrung (34) in der zweiten Aussparung (38b) angeordnet ist, derart, dass jeweils eine Schraubendruckfeder eine Federkraft gegen jeweils einen Profilschenkel ausübt.

5. Schnellwechselsystem nach einem der vorhergehenden Ansprüche, ferner umfassend eine Sicherungsscheibe (33), die die Aussparung (32a) der Reifenaufnahme (32) zumindest teilweise abdeckt, wobei die Sicherungsscheibe ein zur Aussparung (32a) der Reifenaufnahme (32) koaxiales Loch (33a) aufweist, dessen Durchmesser kleiner ist als der Innendurchmesser der Aussparung (32a) der Reifenaufnahme (32) und kleiner ist als der Außendurchmesser der Adapteraufnahme (31), wobei die Sicherungsscheibe (33) mit Befestigungsmittel, vorzugsweise Schrauben, an der Reifenaufnahme (32) befestigbar ist und im befestigten Zustand ein axiales Bewegen der in der Aussparung (32a) der Reifenaufnahme (32) angeordneten Adapteraufnahme relativ zur Reifenaufnahme weitgehend verhindert.

6. Schnellwechselsystem nach einem der vorhergehenden Ansprüche, wobei die Adapteraufnahme (31) eine dritte Aussparung (38d) an der die zweite Aussparung (38b) aufweisenden gegenüberliegenden Grundfläche aufweist, zur Aufnahme eines Achsenendabschnittes und/oder eines Achsadapters (20), wobei die dritte Aussparung (38d) einen Querschnitt aufweist, der eine Drehung des in der dritten Aussparung (38d) angeordneten Achsenendabschnittes und/oder Achsadapters um die Längsachse (LA) des Schnellwechselsystems verhindert.

7. Schnellwechselsystem nach Anspruch 6, wobei die dritte Aussparung (38d) der Adapteraufnahme (31) und der Achsenendabschnitt und/oder der Achsadapter (20) einen identischen Querschnitt aufweisen und/oder wobei die dritte Aussparung (38d) der Adapteraufnahme (31) eine Seitenwandung mit drei im Wesentlichen in einem Winkel von 60° zueinander angeordneten flachen Abschnitte (23a) aufweist.

8. Schnellwechselsystem nach Anspruch 7, wobei jeweils zwei flache Abschnitte (23a) der Seitenwandung über einen gekrümmten Abschnitt (23b) mit einem vorbestimmten Radius miteinander verbunden sind.

9. Schnellwechselsystem nach einem der vorhergehenden Ansprüche, wobei die Adapteraufnahme (31) eine Anzahl von radialen Durchbrechungen (39a) aufweist, die jeweils in der dritten Aussparung (38d) der Adapteraufnahme (31) münden, wobei die radialen Durchbrechungen (39a) vorzugsweise drei radiale Bohrlöcher (39a) umfassen, die in Umfangsrichtung der Adapteraufnahme (31) gleichmäßig beabstandet sind.

10. Schnellwechselsystem nach einem der vorhergehenden Ansprüche, wobei die Adapteraufnahme (31) Sicherungselemente (39) aufweist, die mit einem in der dritten Aussparung (38d) der Adapteraufnahme (31) angeordneten Achsenendabschnitt oder Achsadapter (20) zusammenwirken, die zwischen einer Sicherungsposition und einer Entsicherungsposition bewegbar sind und die in einer Sicherungsposition ein axiales Bewegen des in der dritten Aussparung (38d) der Adapteraufnahme (31) angeordneten Achsenendabschnittes oder Achsadapters (20) relativ zur Adapteraufnahme verhindern, und wobei die Sicherungselemente (39) in den radialen Durchbrechungen (39a) der Adapteraufnahme (31) angeordnet sind und axial nach innen in die Sicherungsposition bewegbar sind.

11. Schnellwechselsystem nach Anspruch 10, wobei die Sicherungselemente (39) in der Sicherungsposition zumindest teilweise aus den jeweiligen Mündungen der Durchbrechungen (39a) herausragen und in korrespondierende Aussparungen (24), die in Umfangsrichtung des Achsenendabschnittes oder Achsadapters (20) angeordnet sind, eingreifen, und wobei die Sicherungselemente (39) vorzugsweise kugelförmig oder stiftförmig ausgestaltet sind, wobei in jeder Durchbrechung (39a) der Adapteraufnahme (31) vorzugsweise mindestens zwei kugelförmige Sicherungselemente (39) angeordnet sind.

12. Schnellwechselsystem nach einem der vorhergehenden Ansprüche wobei in der Seitenwandung der zylinderförmigen Aussparung (32a) der Reifenaufnahme (32) eine Anzahl von in Umfangsrichtung vorzugsweise gleichmäßig beabstandeten Kulissenaussparungen (40) vorgesehen sind, wobei die Tiefe der Kulissenaussparungen in Umlaufrichtung zunimmt, wobei vorzugsweise drei Kulissenaussparungen (40) vorgesehen sind und wobei die in den radialen Durchbrechungen (39a) der Adapteraufnahme (31) angeordneten Sicherungselemente (39) zumindest teilweise in die Kulissenaussparungen (40) hineinragen.

13. Schnellwechselsystem nach Anspruch 12, wobei bei einer Drehung der Adapteraufnahme (31) um die Längsachse (LA) des Schnellwechselsystems relativ zur Reifenaufnahme (32) und
- in Richtung zur geringeren Tiefe der Kulissenaussparungen (40) die Kulissenaussparungen ein Bewegen der Sicherungselemente (39) in die Sicherungsposition bewirkt, und
- in Richtung zur größeren Tiefe der Kulissenaussparungen (40) die Sicherungselemente (39) in eine Entsicherungsposition bringbar sind.

14. Schnellwechselsystem nach einem der vorhergehenden Ansprüche, ferner umfassend einen Achsadapter (20), der an einem Achsenendabschnitt einer Fahrwagenachse eines Inspektionswagens befestigbar, insbesondere lösbar befestigbar ist, und der das gleiche Querschnittsprofil aufweist, wie die dritte Aussparung (38d) in der Adapteraufnahme (31), wobei der Achsadapter (20) in Umfangsrichtung zueinander beabstandete Aussparungen (24) aufweist, in die die Sicherungselemente (39) in der Sicherungsposition eingreifen.

15. Inspektionswagen (10), insbesondere eines Kanalinspektions- und/oder Kanalreinigungssystems, umfassend zumindest eine Fahrwagenachse, an der Fahrwagenräder angeordnet sind, die ein Schnellwechselsystem (30) nach einem der vorhergehenden Ansprüche aufweisen.

## Claims

1. A quick-change system (30) for crawler wheels of an inspection crawler (10), in particular of a sewer inspection and/or sewer cleaning system, comprising an adapter retainer (31) and a tyre retainer (32), wherein
- the adapter retainer (31) is configured in an essentially cylindrical shape,
- the tyre retainer (32) has an essentially cylindrical and axial recess (32a), the adapter retainer (31) being arranged within the recess (32a) of the tyre retainer (32) in such a manner as to be rotatable about a longitudinal axis (LA) of the quick-change system relative to the tyre retainer (32), and
**characterised in that**
- the recess (32a) of the tyre retainer (32) has a locking device (35, 38) arranged therein which cooperates with the tyre retainer (32) and with the adapter retainer (31) and which, when in a locked state, secures the adapter retainer (31) against rotation about a longitudinal axis (LA) of the quick-change system relative to the tyre retainer (32).

2. The quick-change system as claimed in claim 1, wherein the locking device comprises an interlocking cross (38) and at least one spring element, wherein
- in the bottom surface of the recess (32a) of the tyre retainer (32), a first recess (38a) is provided which corresponds to the interlocking cross and with which said interlocking cross may be at least partially brought into engagement so that the locking device is in a locked condition,
- in the base surface of the adapter retainer (31), a second recess (38b) is provided which corresponds to the interlocking cross and with which said interlocking cross may be entirely brought into engagement so that the locking device is in an unlocked condition,
- the second recess (38b) accommodates the at least one spring element, said spring element pushing the interlocking cross partially out of the second recess (38b) and into the first recess (38a) when the locking device is in a locked condition, such that the interlocking cross is engaged with both the first recess (38a) and the second recess (38b) when the locking device is in the locked condition.

3. The quick-change system as claimed in claim 2, wherein the locking device further comprises a pressure pin (35) which is disposed in an axially drilled hole (35b) in the bottom of the recess (32a) of the tyre retainer (32) and cooperates with the interlocking cross, a movement of the pressure pin against the interlocking cross causing said interlocking cross to be moved against the spring force of the spring element, such that the interlocking cross may be entirely pushed out of the first recess (38a) in the bottom surface of the tire retainer (32) and the locking device may be brought into an unlocked condition.

4. The quick-change system as claimed in any one of claims 2 to 3, wherein the interlocking cross (38) has a cross profile including three profile legs (38c) arranged at angles of 120° relative to one another, and wherein said at least one spring element comprises three helical compression springs, each of said helical compression springs being at least partially disposed in an axial hole 34 provided in the second recess (38b) in such a manner that each helical compression spring respectively exerts a spring force against a corresponding profile leg.

5. The quick-change system as claimed in any of the preceding claims, further comprising a securing disc (33) which at least partially covers the recess (32a) of the tyre retainer (32), wherein said securing disc has a hole (33a) which is coaxial with the recess (32a) of the tyre retainer (32) and the diameter of which is smaller than the inner diameter of the recess (32a) of the tyre retainer (32) and is smaller than the outer diameter of the adapter retainer (31), wherein said securing disc (33) is attachable to the tyre retainer (32) via fastening means, preferably screws, and in an attached condition largely prevents axial displacement of the adapter retainer disposed in the recess (32a) of the tyre retainer (32) relative to said tyre retainer.

6. The quick-change system as claimed in any of the preceding claims, wherein the adapter retainer (31) has a third recess (38d) which is disposed on the face opposed to the base surface having the second recess (38b) and is provided for receiving a shaft end portion and/or a shaft adapter (20), and wherein said third recess (38d) has a cross-section that prevents the shaft end portion and/or the shaft adapter disposed in the third recess (38d) from rotating about the longitudinal axis (LA) of the quick-change system.

7. The quick-change system as claimed in claim 6, wherein the third recess (38d) of the adapter retainer (31) and the shaft end portion and/or shaft adapter (20) have an identical cross-section, and/or wherein the third recess (38d) of the adapter retainer (31) has a lateral wall including three flat portions (23a) which are essentially arranged at angles of 60° relative to one another.

8. The quick-change system as claimed in claim 7, wherein any two adjacent flat portions (23a) of the lateral wall are interconnected via a curved portion (23b) having a predetermined radius of curvature.

9. The quick-change system as claimed in any of the preceding claims, wherein the adapter retainer (31) has a number of radial apertures (39a) leading each to the third recess (38d) of the adapter retainer (31), wherein said radial apertures (39a) preferably comprise three radially drilled holes (39a) evenly spaced from one another about the circumference of the adapter retainer (31).

10. The quick-change system as claimed in any of the preceding claims, wherein the adapter retainer (31) has securing elements (39) cooperating with a shaft end portion or shaft adaptor (20) disposed in the third recess (38d) of the adapter retainer (31) which are movable between a secured position and an unsecured position and which, when in a secured position, prevent said shaft end portion or shaft adapter (20) disposed in the third recess (38d) of the adapter retainer (31) from axially moving relative to said adapter retainer, and wherein said securing elements (39) are arranged within the radial apertures (39a) of the adapter retainer (31) and may be moved axially inwardly into their secured positions.

11. The quick-change system as claimed in claim 10, wherein the securing elements (39), when in the secured position, at least partially protrude from the respective orifices of the apertures (39a) and engage with corresponding recesses (24) which are circumferentially arranged on the shaft end portion or shaft adapter (20), and wherein the securing elements (39) are preferably configured in a spherical or pin-shaped form, each aperture (39a) of the adapter retainer (31) preferably housing at least two spherical securing elements (39).

12. The quick-change system as claimed in any of the preceding claims, wherein the lateral wall of the cylindrical recess (32a) of the tyre retainer (32) has a number of slide guide recesses (40) provided therein which are preferably evenly spaced apart from one another about the circumference, wherein the depth of said slide guide recesses increases in the direction of rotation, wherein preferably three slide guide recesses (40) are provided, and wherein the securing elements (39) disposed in the radial apertures (39a) of the adapter retainer (31) at least partially protrude into said slide guide recesses (40).

13. The quick-change system as claimed in claim 12, wherein when the adapter retainer (31) is being rotated about the longitudinal axis (LA) of the quick-change system relative to the tyre retainer (32),
- such rotation in the direction of the lower depth of said slide guide recesses (40) causes the securing elements (39) to be moved to the secured position, and
- such rotation in the direction of the greater depth of said slide guide recesses (40) will cause the securing elements (39) to be moved to an unsecured position.

14. The quick-change system as claimed in any of the preceding claims, further comprising a shaft adapter (20) which may be fixed, in particular detachably fixed, onto a shaft end portion of a crawler shaft of an inspection crawler and which has the same cross-sectional profile as the third recess (38d) in the adapter retainer (31), wherein said shaft adapter (20) has recesses (24) which are circumferentially spaced apart from one another and with which the securing elements (39) engage when they are in their secured positions.

15. An inspection crawler (10), in particular of a sewer inspection and/or sewer cleaning system, comprising at least one crawler shaft that accommodates crawler wheels having a quick-change system (30) as claimed in any of the preceding claims.

## Revendications

1. Système de changement rapide (30) pour roues de chariot d'un chariot d'inspection (10), en particulier d'un système d'inspection de canalisation et/ou de nettoyage de canalisation, comprenant un élément récepteur d'adapteur (31) et un élément récepteur de pneu (32), dans lequel
- l'élément récepteur d'adapteur (31) est de forme essentiellement cylindrique,
- l'élément récepteur de pneu (32) présente un évidement (32a) de forme essentiellement cylindrique et axiale, l'élément récepteur d'adapteur (31) étant disposé dans l'évidement (32a) de l'élément récepteur de pneu (32) de manière à pouvoir tourner autour d'un axe longitudinal (LA) du système de changement rapide par rapport à l'élément récepteur de pneu (32), et
**caractérisé en ce que**
- dans l'évidement (32a) de l'élément récepteur de pneu (32) est disposé un dispositif d'arrêt (35, 38) qui coopère avec l'élément récepteur de pneu (32) et avec l'élément récepteur d'adapteur (31) et qui empêche l'élément récepteur d'adapteur (31), à l'état arrêté, de tourner autour de l'axe longitudinal (LA) du système de changement rapide par rapport à l'élément récepteur de pneu (32).

2. Système de changement rapide selon la revendication 1, dans lequel le dispositif d'arrêt comprend une croix de verrouillage (38) et au moins un élément ressort, dans lequel
- dans la surface de fond de l'évidement (32a) de l'élément récepteur de pneu (32) est prévu un premier évidement (38a) correspondant à la croix de verrouillage dans lequel ladite croix de verrouillage peut être mise partiellement en prise lorsque le dispositif d'arrêt se trouve dans un état arrêté,
- dans la surface de base de l'élément récepteur d'adapteur (31) est prévu un deuxième évidement (38b) correspondant à la croix de verrouillage dans lequel ladite croix de verrouillage peut être mise entièrement en prise lorsque le dispositif d'arrêt se trouve dans un état non arrêté,
- ledit au moins un élément ressort est disposé dans le deuxième évidement (38b), l'élément ressort poussant la croix de verrouillage partiellement hors du deuxième évidement (38b) et la faisant entrer dans le premier évidement (38a) lorsque le dispositif d'arrêt se trouve à l'état arrêté de sorte que lorsque le dispositif d'arrêt est à l'état arrêté, la croix de verrouillage entre en prise à la fois dans le premier évidement (38a) et dans le deuxième évidement (38b).

3. Système de changement rapide selon la revendication 2, dans lequel le dispositif d'arrêt comprend en outre une goupille de pression (35) qui est disposée dans un trou axial (35b) percé dans le fond de l'évidement (32a) de l'élément récepteur de pneu (32) et qui coopère avec la croix de verrouillage, un déplacement de la goupille de pression contre la croix de verrouillage provoquant un déplacement de la croix de verrouillage s'opposant à la force de ressort de l'élément ressort de sorte qu'il est possible de faire sortir complètement la croix de verrouillage hors du premier évidement (38a) ménagé dans la surface de fond de l'élément récepteur de pneu (32) et de mettre le dispositif d'arrêt dans un état non arrêté.

4. Système de changement rapide selon l'une quelconque des revendications 2 à 3, dans lequel la croix de verrouillage (38) présente un profil en croix composé de trois branches (38c) disposées entre elles selon un angle de 120°, et dans lequel ledit au moins un élément ressort comprend trois ressorts hélicoïdaux, chacun des ressorts hélicoïdaux étant disposé au moins partiellement dans un alésage axial (34) ménagé dans le deuxième évidement (38b) de telle sorte que respectivement un ressort hélicoïdal exerce une force de ressort contre respectivement une branche dudit profil.

5. Système de changement rapide selon l'une quelconque des revendications précédentes comprenant en outre un disque de blocage (33) qui recouvre au moins partiellement l'évidement (32a) de l'élément récepteur de pneu (32), le disque de blocage présentant un trou (33a) disposé coaxialement à l'évidement (32a) de l'élément récepteur de pneu (32) et dont le diamètre est inférieur au diamètre intérieur de l'évidement (32a) de l'élément récepteur de pneu (32) et est inférieur au diamètre extérieur de l'élément récepteur d'adapteur (31), le disque de blocage (33) pouvant être fixé sur l'élément récepteur de pneu (32) grâce à des moyens de fixation, de préférence des vis, et empêchant en grande partie, à l'état fixé, un déplacement axial de l'élément récepteur d'adapteur disposé dans l'évidement (32a) de l'élément récepteur de pneu (32) par rapport audit élément récepteur de pneu.

6. Système de changement rapide selon l'une quelconque des revendications précédentes, dans lequel l'élément récepteur d'adapteur (31) présente un troisième évidement (38d) situé dans la surface de base opposée à celle où se trouve le deuxième évidement (38b), et ce en vue de recevoir une extrémité d'essieu et/ou un adapteur d'essieu (20), le troisième évidement (38d) présentant une section transversale qui empêche l'extrémité d'essieu et/ou l'adapteur d'essieu disposé/e(s) dans le troisième évidement (38d) de tourner autour de l'axe longitudinal (LA) du système de changement rapide.

7. Système de changement rapide selon la revendication 6, dans lequel le troisième évidement (38d) de l'élément récepteur d'adapteur (31) et l'extrémité d'essieu et/ou l'adapteur d'essieu (20) présentent une section transversale identique, et/ou dans lequel le troisième évidement (38d) de l'élément récepteur d'adapteur (31) présente une paroi latérale ayant trois parties planes (23a) disposées entre elles essentiellement selon un angle de 60°.

8. Système de changement rapide selon la revendication 7, dans lequel respectivement deux parties planes (23a) de la paroi latérale sont reliées entre elles par une partie courbe (23b) ayant un rayon prédéterminé.

9. Système de changement rapide selon l'une quelconque des revendications précédentes, dans lequel l'élément récepteur d'adapteur (31) présente un nombre donné d'ouvertures radiales (39a) qui débouchent respectivement dans le troisième évidement (38d) de l'élément récepteur d'adapteur (31), les ouvertures radiales (39a) comprenant de préférence trois trous radiaux (39a) espacés uniformément en sens circonférentiel de l'élément récepteur d'adapteur (31).

10. Système de changement rapide selon l'une quelconque des revendications précédentes, dans lequel l'élément récepteur d'adapteur (31) présente des éléments de blocage (39), lesquels coopèrent avec une extrémité d'essieu ou un adapteur d'essieu (20) disposé(e) dans le troisième évidement (38d) de l'élément récepteur d'adapteur (31), lesquels peuvent être déplacés entre une position de blocage et une position de déblocage et lesquels empêchent, dans une position de blocage, un déplacement axial de l'extrémité d'essieu ou de l'adapteur d'essieu (20) disposé(e) dans le troisième évidement (38d) de l'élément récepteur d'adapteur (31) par rapport audit élément récepteur d'adapteur, et dans lequel les éléments de blocage (39) sont disposés dans les ouvertures radiales (39a) de l'élément récepteur d'adapteur (31) et peuvent être déplacés axialement vers l'intérieur pour passer dans la position de blocage.

11. Système de changement rapide selon la revendication 10, dans lequel les éléments de blocage (39) dépassent, en position de blocage, au moins partiellement des embouchures respectives des ouvertures (39a) et entrent en prise dans des évidements correspondants (24) qui sont disposés en sens circonférentiel de l'extrémité d'essieu ou de l'adapteur d'essieu (20), et dans lequel les éléments de blocage (39) sont réalisés de préférence en forme de sphère ou de tige, dans chaque ouverture (39a) de l'élément récepteur d'adapteur (31) étant disposés de préférence au moins deux éléments de blocage (39) de forme sphérique.

12. Système de changement rapide selon l'une quelconque des revendications précédentes, dans lequel un nombre donné d'évidements de coulissement (40) espacés de préférence uniformément en sens circonférentiel est prévu dans la paroi latérale de l'évidement cylindrique (32a) de l'élément récepteur de pneu (32), la profondeur des évidements de coulissement augmentant en sens de rotation, les évidements de coulissement (40) étant prévus de manière préférentielle au nombre de trois et les éléments de blocage (39) disposés dans les ouvertures radiales (39a) de l'élément récepteur d'adapteur (31) s'étendant au moins partiellement dans les évidements de coulissement (40).

13. Système de changement rapide selon la revendication 12, dans lequel lorsque l'on fait tourner l'élément récepteur d'adapteur (31) autour de l'axe longitudinal (LA) du système de changement rapide par rapport à l'élément récepteur de pneu (32),
- une rotation en direction de la moins grande profondeur des évidements de coulissement (40) provoque un déplacement des éléments de blocage (39) dans la position de blocage, et
- une rotation en direction de la plus grande profondeur des évidements de coulissement (40) permet de mettre les éléments de blocage (39) dans une position de déblocage.

14. Système de changement rapide selon l'une quelconque des revendications précédentes, comprenant en outre un adapteur d'essieu (20) qui peut être fixé, en particulier de manière amovible, sur une extrémité d'essieu d'un essieu de chariot d'un chariot d'inspection et qui présente le même profil de coupe transversale que le troisième évidement (38d) ménagé dans l'élément récepteur d'adapteur (31), l'adapteur d'essieu (20) présentant en sens circonférentiel des évidements (24) espacés les uns par rapport aux autres dans lesquels entrent en prise les éléments de blocage (39) lorsqu'ils sont en position de blocage.

15. Chariot d'inspection (10), en particulier d'un système d'inspection de canalisation et/ou de nettoyage de canalisation, comprenant au moins un essieu de chariot sur lequel sont disposées des roues de chariot qui présentent un système de changement rapide (30) selon l'une quelconque des revendications précédentes.
